# EUROPEAN PATENT APPLICATION

(11) **EP 1 777 915 A1**
(43) Date of publication of application: **25.04.2007**
(21) Application number: 06742074.5
(22) Date of filing: 02.06.2006
(51) Int. Cl.: H04L 29/06

(54) **AN METHOD AND APPARATUS FOR IMPLEMENTING THE SIGNALING PROXY**

(30) Priority: 07.06.2005 CN 200510075021
(71) Applicant: Huawei Technologies Co., Ltd., Longgang District Shenzhen Guangdong 518129 (CN)
(72) Inventor: YAO, Xin, Huawei Administration Building, Shenzhen, Guangdong 518219 (CN)
(74) Representative: Colombo, Michel
(86) International application number: PCT/CN2006/001187
(87) International publication number: WO 2006/131057

(57) **Abstract**

The present invention discloses a method and apparatus for implementing signaling proxy. The method includes: in a signaling proxy of a communication network, configuring identification information of a message which needs to be processed by the signaling proxy; after receiving the message, the SP determines whether the message needs to be processed by the SP, and if yes, the SP performs proxy processing on and forwards the message. The apparatus includes: a unit for receiving and recognizing messages, a unit for processing messages, and a unit for forwarding messages. According to the present invention, a multiple of terminals can send messages to the same one IP address or domain name, which provides great convenience for wide application of VoIP service. Moreover, specific implementations of the present invention are easy and need no modifications on the present terminal devices.

## Description

### Field of the Invention

The present invention relates to a network communication, and more particularly, the present invention relates to a method and apparatus for signaling processing in the communication network.

### Background of the Invention

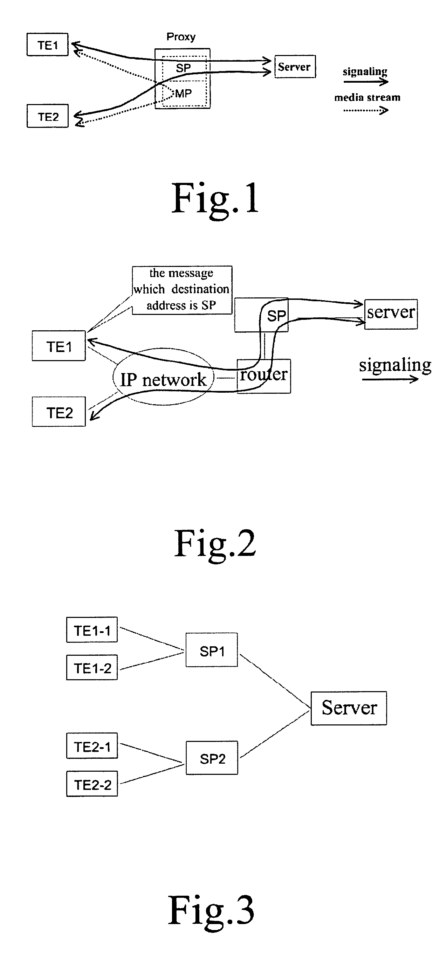

With rapid development of network communication technology, Voice over IP(VoIP) network has been applied widely. A network structure of a VoIP network is shown in Fig. 1, in which two parts: SP(Signaling Proxy) and MP(Media Proxy)are included.

For a VoIP user (that is, user terminal TE), a signaling proxy SP can be seen as a server, i.e., all information of user registration and calling is sent to the SP first, and is forwarded to the server after being processed by the SP. For a server, the SP can be seen as a user, i.e., the server sends a request of calling a called party to the SP, and the SP forwards the request to a real called user after signaling processing.

At present, generally, an SP is required to support one or several proxy functions in Session Initiation Protocol(SIP), H.323, Media Gateway Control Protocol(MGCP), H.248, and etc.

The MP (media proxy) is used as a proxy for media streams. Media streams between a user and outside are processed and forwarded by an MP. Media streams in general refer to Real-Time Transport Protocol(RTP)/Real-Time Transport Control Protocol(RTCP) streams. A session table for media stream processing at an MP is dynamically created/deleted by instructions of an SP.

Both SP and MP are logical concepts. One SP can communicate with one or several MPs. SP and MP can be integrated in one device. SP or MP can be implemented in an individual device, or can be integrated into other devices.

As a device at the application layer, an SP only supports or processes a message whose destination address is the SP. As shown in Fig. 2, for convenience of illustration, a router device is added in Fig.2. The SP is connected to a router. According to a common routing mode, only those messages whose destination address is the SP are transmitted by the router to the SP for processing. Therefore, at present, the SP can only receive and process signaling messages whose destination address is the SP.

It can be seen easily that there are some limitations in networking in the above situation. For example, as shown in Fig. 3, TE1-1, TE1-2 are connected to SP1; TE2-1, TE2-2 are connected to SP2. Since the SP only processes a message whose destination is the SP, the destination address of messages sent by Tel-x should be an address of SP1 and the destination address of messages sent by Te12-x should be an address of SP2.

Therefore addresses of different servers are possibly different which is disadvantageous to deploy services such as VoIP on a large scale.

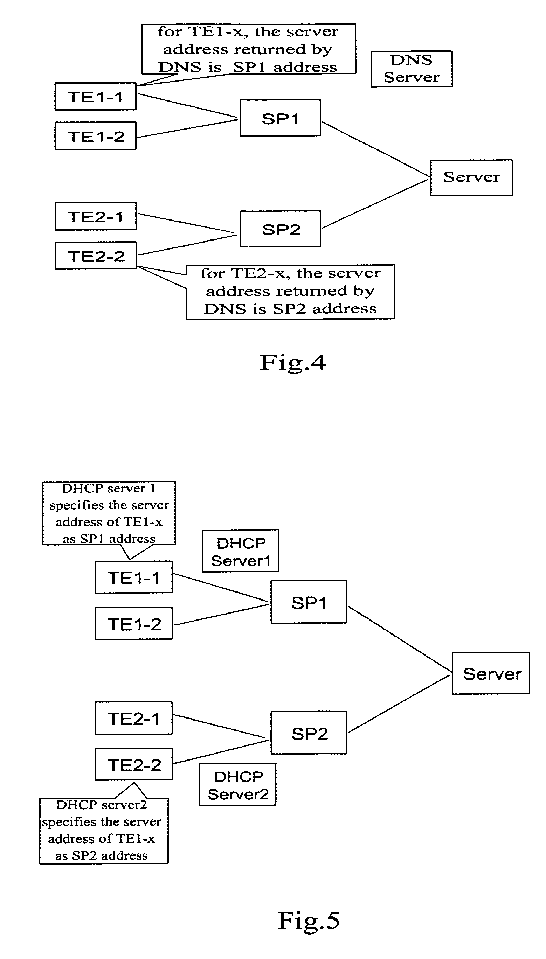

Therefore, an existing method adopts an implementation mode in which a special domain name server (DNS) device is introduced, as shown in Fig.4, and specifically, in the method, all TEs are configured with the same one domain name, and for different TEs, DNS returns different SP addresses. For example, for TE1-x, a server address returned is the SP1 address; for TE2-x, a server address returned is the SP2 address.

Such an implementation mode has a high demand for the DNS. The server is required to make a discrimination and determination according to terminal addresses. However, a common DNS does not support this application.

Another existing method adopts an implementation mode in which a special Dynamic Host Configure Protocol(DHCP)is introduced, as shown in Fig.5 and specifically, in the method, an address of VoIP server can be designated directly by the DHCP. The DHCP server is required to be extended, and at the same time, a terminal is also required to support the DHCP extension.

In this method, the special DHCP server is required to be configured, and at the same time, the terminal is also required to support the DHCP extension. In the same way, a common DHCP server or a terminal does not support this application.

### Summary of the invention

The present invention is to provide a method for implementing signaling proxy in the communication network, so that each TE can communicate with each SP through the same IP address or domain name, which provides conveniences for applying VoIP service widely.

The present invention provides a method for implementing signaling proxy, wherein the method includes steps of:

configuring a proxy processing strategy in a signaling proxy;

after receiving a message, the SP determines whether the message needs to be processed by the SP, and if yes, it performs proxy processing on the received message and forwards it.

The strategy includes: identifying the received message needing to be processed by one or any combination of VPN ID, VLAN ID, MPLS ID, IP protocol type, source IP address, source port, destination IP address, destination port of the message.

The method further includes steps of:

in the signaling proxy, setting destination address of a message needing to be processed by the signaling proxy as a local address.

after receiving a message sent from a proxied side, the SP determines that the message needs to be processed according to information of destination address in the message; and

replaces destination address of the message by a server address, and source address by a server side address of the sp, and forwards the message.

After receiving a message sent from the server, the signaling proxy replaces source address of the message sent from the server by destination address of the original message sent from the proxied side and destination address of the message sent from the server by the proxied side address, and forwards the message.

The signaling proxy processing includes:

changing the source and destination IP addresses and port numbers of the received message, replacing data of the application layer, updating a signaling state and/or creating session table items.

Before the signaling proxy receives a message, a forwarding strategy is configured in a network device through which the message sent by a proxied side passes, the forwarding strategy stipulating that a forwarding path of the message to be processed passes through the corresponding signaling proxy.

When receiving a message which is sent from a proxied side and needs to be processed, the network device forwards the message to the signaling proxy according to the configured forwarding strategy.

In the signaling proxy, information of the forwarding path of the message returned from the server is recorded in a configuration or study way.

after receiving a message returned from the server, the signaling proxy forwards the message according to the recorded information of the forwarding path.

The network device is configured to be a default gateway of the signaling proxy, and when the signaling proxy receives the message returned by the server, it processes the message and sends the processed message to this default gateway.

According to another aspect of the present invention an apparatus for implementing signaling proxy is provided, wherein the apparatus includes:

a unit for receiving and recognizing messages, which is configured with a proxy processing strategy, used to recognize a message which needs to be processed;

a unit for processing messages, which processes the message which needs to be processed;

a unit for forwarding messages, which forwards the processed message to a corresponding server.

The proxy processing strategy includes:

identifying a received message which needs to be processed by the signaling proxy by any one or any combination of VPN ID, VLAN ID, MPLS ID, IP protocol type, source IP address, source port, destination IP address, destination port of the message.

The signaling proxy processing includes:

changing source and destination IP addresses and port numbers of the received message, replacing data of the application layer, updating a signaling state and/or creating session table items.

After receiving the message, the signaling proxy replaces source address of the message by destination address of the original message sent from the proxied side and destination address of the message sent from the server by the proxied side address respectively, and forwards the message according to the replaced addresses.

From the above technical solution provided by the present invention, it can be seen that by implementing the present invention, a lot of terminals (TEs) may send messages with the same one IP address or domain name, which provides great convenience for wide application of VoIP service.

Moreover, there is no need to modify the present terminal devices when implementing the present invention, which makes the implementing of the present invention simpler.

In addition, there is no need for special DNS, DHCP devices to provide support when implementing the present invention, so the cost and difficulty in implementing the present invention will be greatly decreased.

### Brief Descriptions of the Drawings

Fig.1 is a schematic diagram illustrating a networking structure of VoIP network of prior art;

Fig.2 is a schematic diagram illustrating a networking structure of VoIP network of prior art;

Fig.3 is a schematic diagram illustrating a networking structure of VoIP network of prior art;

Fig.4 is a schematic diagram illustrating networking structure of VoIP network configured with a DNS;

Fig.5 is a schematic diagram illustrating a networking structure of VoIP network configured with a DHCP server;

Fig.6 is a schematic diagram illustrating proxy processing in an embodiment of the present invention;

Fig.7 is a schematic diagram illustrating conventional signaling transmission direction in a parallel networking structure of the VoIP network;

Fig.8 is a schematic diagram illustrating a signaling transmission direction of Fig.7 after implementing an embodiment of the present invention.

### Detailed Descriptions of the Embodiments

The core of the present invention is to perform proxy for messages whose destination address is not an SP itself in an active manner.

In a specific implementation, according to a networking structure of a proxy in a network, the present invention can be considered in two cases: one is under serial networking, and the other is under parallel networking. A detailed implementation of the present invention in the two cases will be explained as follows.

Firstly, an implementation of the present invention in the case of serial networking will be explained.

In a serial networking structure, an SP device is considered to be serially connected between a terminal and a server. In the serial networking structure, even if destination address of a message sent by the terminal is not an address of the SP, the message still will pass through the SP.

Since the destination address of the message is not the SP address, it is required that the SP can provide proxy service for a message whose destination is not the SP address.

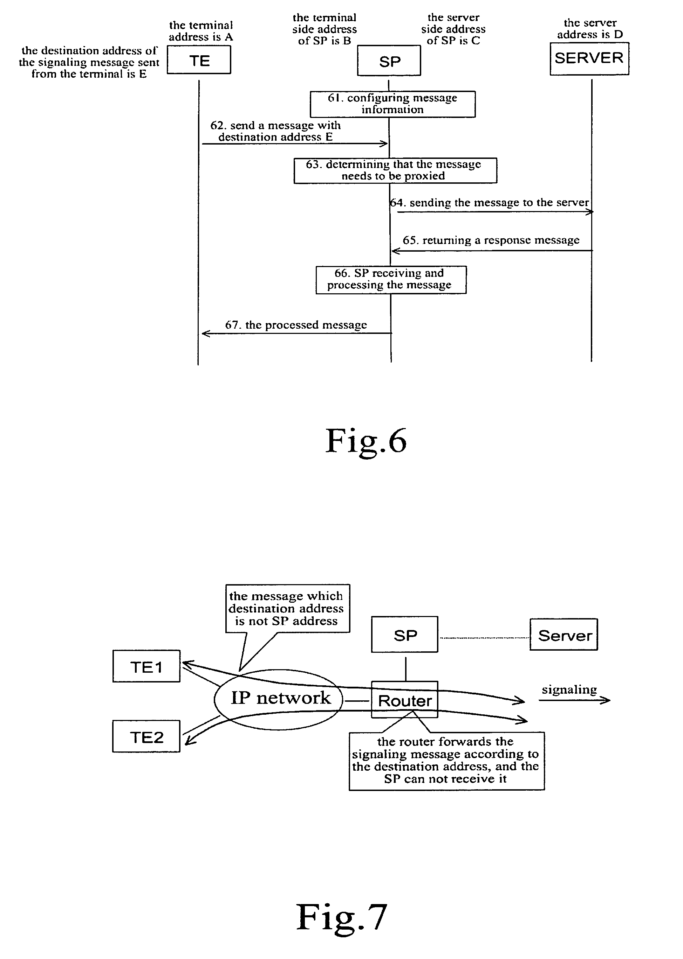

A specific embodiment is shown in Fig. 6, wherein an address of terminal TE is A, an terminal side address of SP is B, a server side address of SP is C, and a server address is D, and the implementation solution includes:

step 61: at the SP, configure information about messages that need to be processed;

Specifically, in step 61, the SP is configured so that it performs proxy processing on messages with destination address E, and in this way, the SP may only selectly provide proxy service for messages according to the configuration;

step 62: at a proxied side, the user terminal side or the server side may send messages to the SP, and as an example, if the user terminal side sends a message to the SP as shown in Fig. 6, the source address of the message is Aa, and the destination address is Ee; the message is recorded as <Aa-Ee> message;

step 63: determine a message which needs to be processed according to the configured information, and performing proxy for the message;

that is to say, when a message from a terminal side arrives at the SP, the SP checks the destination address of the message, and determines whether the message needs to be processed; if not, it forwards or discards the message according to the configuration; if yes, it performs proxy processing on the message;

A flow of the signaling proxy processing generally includes: changing source and destination addresses and ports (that is, <Aa-Ee> is changed to be <Cc-Dd>), and replacing data in the application layer; updating a signaling state; creating session table items, which is helpful to quickly find a session corresponding to the message returned from the server side , etc. ;

step 64: after the signaling proxy processing is finished, send the message to the server;

Specifically, the SP sends message <Cc-Dd> to the server; and for the server, the terminal is from <Cc>.

step 65: the server returns the corresponding message to the SP;

after finishing the processing, the server sends a response message to address <Cc>, and the message sent by the server is <Dd-Cc>;

step 66: after receiving the signaling message <Dd-Cc> from the server, the SP processes the message, and changes the IP address and port to be <Ee-Aa>;

in the step, the destination address of the message is changed to be the corresponding address E, rather than address B of the SP itself, and the SP updates the corresponding session state; and

step 67: the SP sends the message <Ee-Aa> to the terminal, and the received message of the terminal is sent from E; thus completing the message intercommunication.

The above flow requires that the SP can support filtering processing on a message when receiving the message. For receiving and sending a message, there are changes in the flow.

The SP can also adopt the following method to process a message. Take the situation in Fig.6 as an example:

1. the SP uses address E as one of addresses of the SP device itself; the address can be an IP address on a logical interface, or an IP address on a real physical interface;

2. the SP receives a signaling message with destination address E, which is a local message destined for the SP, and the SP can directly process the message according to the original signaling processing flow;

In this method, it is required that the SP does not broadcast this address, i.e. , the IP address is valid only in the SP itself. Otherwise, two or more devices in the network may have the same one IP address, which will make part of routings invalid and messages sent to wrong devices.

Another embodiment of the present invention in the case of parallel networking will be explained as follows.

As shown in Fig.7, parallel networking means that if the destination address of a message is not the SP, the SP will not receive the corresponding signaling message, and of course it will not perform proxy processing on the message.

Moreover, it is not enough just relying on the configuration at the SP to implement proxy, but the cooperation of the devices in the network is needed. Take Fig.7 as an example, the function of strategy routing can be started in a router (that is, forward the message according to the forwarding strategy, which is configured in advance), that is, the router routes the information according to the configured strategy, rather than simply according to the destination address.

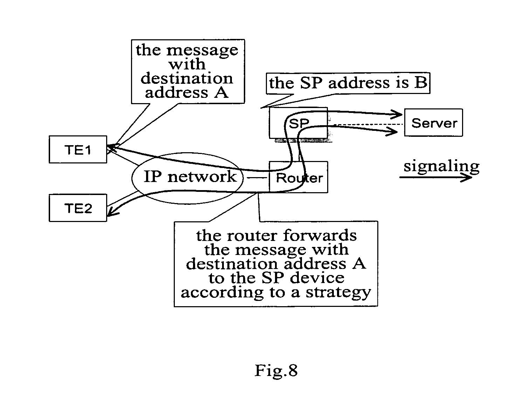

As shown in Fig. 8, such a strategy, through which the message with destination address A will be forwarded to an interface connected with the SP, can be configured on a router.

In this way, when the router receives a signaling message with destination address A sent from a terminal, the router can forward it to the SP. Therefore, SP can receive the signaling message.

The processing flow after the SP receiving the signaling messages is the same as that described in the case of serial networking of the foregoing embodiment.

The above is a flow of the SP receiving and processing a message from the server side, and a flow of the SP sending a message (SP has already modified the source address of the message to address A) to the router. The following modification in the SP is required:

In the case that only parallel networking structure exists, SP can use a corresponding router as its own default gateway, and in this way the SP is capable of sending a message to a router, and the router sends the message to a terminal;

In the case that a parallel networking and a serial networking coexist, a corresponding forwarding strategy can also be configured at the SP, i.e., SP is configured so that the message with destination address A is sent to a corresponding router device.

In addition, it may be that the SP studies and record information of corresponding address of a message from the router upon receiving it, and can forward a message returned by the server upon receiving it according to the recorded address information; this mode can also be applied to the case in which a parallel networking coexists with a serial networking.

Because mainstream routers or other layer 3 forwarding devices all support the strategy routing at present, therefore, the implementation method adopting the strategy routing in the present invention is feasible.

The router in the present embodiment can be a switch device or other network device with forwarding function.

In the present invention, for the same one SP, there can be parallel networking mode and serial networking mode simultaneously, and the specific and respective signaling proxy processing can adopt the processing flows described above.

To sum up, the present invention is implemented in order to simply achieve signaling proxy function in a communication network, and the implementation of the whole signaling proxy function does not need to add any new device, which brings lower cost in the implementation of the whole signaling proxy.

What mentioned above are just some presently-preferred embodiments of the present invention. Various changes and modifications can be made without departing from the spirits or the principles of the present invention.

## Claims

1. A method for implementing signaling proxy in a communication network, comprising:
configuring a proxy processing strategy in a signaling proxy; and
performing proxy processing on a received message and forwarding the message after the signaling proxy determining that the message needs to be proxy processed by the signaling proxy according to the configured strategy.

2. A method for implementing signaling proxy according to claim 1, wherein said strategy comprises:
identifying a received message which needs to be processed by the signaling proxy by one or a combination of any of VPN ID, VLAN ID, MPLS ID, IP protocol type, source IP address, source port, destination IP address, destination port of the message.

3. The method according to claim 1, wherein the method further comprises:
in the signaling proxy, setting destination address of a message to be proxy processed by the signaling proxy to be a local address.

4. A method for implementing signaling proxy according to claim 2 or 3, further comprising: when receiving a message from a proxied side, the signaling proxy determines that the message needs to be processed according to information of its destination address;
replacing destination address of the received message with a server address and source address with a server side address of the signaling proxy respectively, and forwarding the message.

5. A method for implementing signaling proxy according to claim 4, wherein after receiving a message sent from the server, the signaling proxy replaces source address of the message sent from the server with destination address of said original message sent from the signaling proxy and destination address of the message sent from the server with a proxied side address respectively, and forwards the message.

6. A method for implementing signaling proxy according to any one of claims 1 to 3, wherein said signaling proxy processing comprises:
changing source and destination IP addresses and port numbers of the received message, replacing data of the application layer, updating a signaling state and/or creating session table items.

7. A method for implementing signaling proxy according to any one of claims 1 to 3, wherein before the signaling proxy receives a message,
a forwarding strategy is configured in a network device through which a message sent by a proxied side passes, the forwarding strategy stipulating that a forwarding path of the message to be processed passes through the corresponding signaling proxy.

8. A method for implementing signaling proxy according to claim 7, wherein when the network device receives a message which is sent from the proxied side and needs to be processed, it forwards the message to the signaling proxy according to the forwarding strategy.

9. A method for implementing signaling proxy according to claim 7, wherein in the signaling proxy, information of the forwarding path of the message returned from the server is obtained in a configuration or study way and recorded; and
after the signaling proxy receives the message returned from the server, it forwards the message according to the recorded information of the forwarding path.

10. A method for implementing signaling proxy according to claim 7, wherein said network device is configured to be a default gateway of the signaling proxy, and when the signaling proxy receives the message returned by the server, it processes said message and sends the processed message to the default gateway.

11. An apparatus for implementing signaling proxy, comprising:
a unit for receiving and recognizing messages, which is configured with a proxy processing strategy, used to recognize a message which needs to be processed;
a unit for processing messages, which processes said message that needs to be processed; and
a unit for forwarding messages, which forwards the processed message to a corresponding server.

12. The apparatus according to claim 11, wherein said proxy processing strategy comprises:
identifying a received message which needs to be processed by the signaling proxy by one or any combination of VPN ID, VLAN ID, MPLS ID, IP protocol type, source IP address, source port, destination IP address, destination port of the message.

13. An apparatus for implementing signaling proxy according to claim 11, wherein the signaling proxy processing comprises:
changing source and destination IP addresses and port numbers of the received message, replacing the data of the application layer, updating a signaling state and/or creating session table items.

14. The apparatus according to claim 13, wherein
after the signaling proxy receives the message, it replaces source address of the message with destination address of said original message sent from the proxied side and destination address of the message sent from the server with the proxied side address respectively, and forwards the message according to the replaced addresses.
